(19) **Europäisches Patentamt** / **European Patent Office** / **Office européen des brevets**

(11) **EP 4 641 444 A1**

(12) **EUROPEAN PATENT APPLICATION**

(43) Date of publication:
**29.10.2025 Bulletin 2025/44**

(21) Application number: **24171588.7**

(22) Date of filing: **22.04.2024**

(51) International Patent Classification (IPC):
**G06N 3/045** (2023.01)       **G06N 3/0464** (2023.01)
**G06N 3/0499** (2023.01)

(52) Cooperative Patent Classification (CPC):
**G06N 3/045; G06N 3/0464; G06N 3/0499**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **ABB Schweiz AG**
**5400 Baden (CH)**

(72) Inventor: **Weber, Horst**
**5071 Wals (AT)**

(74) Representative: **Patentanwälte Pinter & Weiss OG**
**Prinz-Eugen-Straße 70**
**1040 Wien (AT)**

(54) **NEURAL NETWORK PROCESSING BASED ON ONE DIMENSIONAL CONVOLUTION**

(57)    In order to improve the efficiency and the processing speed of a convolutional neural net-work (N), a first one-dimensional convolution is carried out in a first layer (K1) of the neural net-work (N), convoluting a first one-dimensional filter kernel (K11) with a first one-dimensional data vector (D1) extracted from a data cube (B), and, parallel to the first one-dimensional convolution, a second one-dimensional convolution is carried out in the first layer (K1), convoluting a second one-dimensional filter kernel (K12) with the one-dimensional data vector (D1) extracted from the data cube (B).

Fig. 6

EP 4 641 444 A1

**Description**

Field of the invention

The present invention relates to a computer-implemented method for processing a neural network, the method comprising the steps of providing a data cube to a first layer of the neural network, from the data cube, by means of said first layer, determining a first bundle of feature maps, each feature map comprising an array of features, from the first bundle of feature maps, in an output layer of the neural network, determining at least one classifier to classify said data cube in a set of pre-defined feature classes.

The invention further relates to a detection device for detecting an object, the detection device having a computing unit running a neural network, the computing running being designed to provide a data cube to a first layer of said neural network, from the data cube, by means of said first layer of the neural network, determine a first bundle of feature maps, each feature map comprising an array of features, and to, from the first bundle of feature maps, by means of an output layer of the neural network, determine at least one classifier to classify said data cube in a set of pre-defined feature classes.

Further, the invention also relates to an arrangement comprising a detection device according to the invention and a hyperspectral or multispectral camera, the hyperspectral or multispectral camera being designed to record a hyperspectral or multispectral image of an object to be detected and to transfer said image to the detection device as a three-dimensional image data cube for processing in the neural network provided in the computing unit.

Background

Images and videos are ubiquitous in modern-day technical applications. With the omnipresence of images and videos, the need for algorithms to efficiently analyze their semantic content grows, amongst others in applications such as search, summarization, classification, detection, etc. Convolutional neural networks (CNNs) have shown to be effective tools for performing such tasks, particularly image recognition, detection, and retrieval. CNNs may be scaled up and configured to support large datasets that are required for the task or the learning process. Under these conditions, CNNs have been found to be successful in learning complex and robust image features.

A CNN is a type of feed-forward artificial neural network where individual neurons are tiled in a manner such that they respond to overlapping regions in a visual field. CNNs are inspired by the behavior of optic nerves in living creatures. Typically, when used for image processing, individual cortical neurons of a CNN respond to stimuli in a restricted region of space known as the "receptive field". The receptive fields of different neurons partially overlap. The response of an individual neuron to stimuli within its receptive field can be described mathematically by a convolution operation. CNNs process data with multiple layers of neuron connections to achieve high accuracy in image recognition. Developments in multi-layer CNNs have led to improvement in the accuracy of complex recognition tasks such as large-category image classification, automatic speech recognition, as well as other data classification/recognition tasks. Also in modern-day machine learning, CNNs are used extensively.

As mentioned above, a CNN is typically made up of various computation layers, usually a convolution layer, a Rectifier Linear Unit (RELU) layer, a pooling layer, a fully connected (FC) layer and output layer(s). These CNN layers operate to make decisions using artificial intelligence processes that build upon image processing techniques. Chipset suppliers have successfully accelerated CNN throughput, primarily by focusing on the convolution layer(s). Continuously, more so-called Single Instruction Multiple Data (SIMD) Multiply Accumulate (SIMD MAC) units have been added, enabling digital signal processors (DSPs) to operate at high and steadily increasing frequencies. Some suppliers also offer powerful scatter-gather direct memory access (DMA), which can be advantageous for two dimensional (2D) convolutions. However, such solutions oftentimes lead to increased switching power consumption, as discussed in US 10,482,337 B2, for instance.

In many practically relevant cases, especially the limitations in computing power of (single) processors have turned out to be problematic, particularly when it comes to processing large amounts of data. Said limitations in computing power have thus led to the exploration of other computing configurations to meet the demands arising in the context of large data sets. Among these configurations, CNN accelerators utilizing hardware specializations in the form of general purpose computing on graphics processing units (GPGPUs), multi-core processors, field programmable gate arrays (FPGAs), and application specific integrated circuits (ASICs) have been researched.

An area where limited computation power oftentimes turns out to be a particularly severe obstacle is the analysis of images that are recorded with multispectral or hyperspectral cameras, i.e., multispectral, or hyperspectral images. A hyperspectral image with, for example, 600 x 480 spatial pixels contains 288,000 spectra, and a neural network that is to classify these spectra, for example, must be executed very often, requiring highly performant and highly effective data processing. Other applications where a specific need for performant and effective data processing is present, are the analysis and identification of high-resolution time series, such as high-resolution audio signals, high-resolution sensor signals, high-resolution transmission signals etc.

The need for effective processing of CNNs is known in the prior art. EP 3 153 996 A2, for instance, discloses a method for implementing a CNN accelerator, utilizing more than one processing elements to implement a standard convolution layer.

US 10,482,337 B2 teaches a specific and complex arrangement of a series of CNN-layers, i.e. RELU-layers, fully connected (FC) layers, etc., equipped with a so-called transaction watch to be able to control and hence accelerate the data processing taking place in the CNN.

However, particularly in the case of image processing based on hyperspectral or multispectral images, none of the methods mentioned above yield satisfactory results, mainly due to the vast amount of data to be processed. It is thus an object of the invention to further improve the efficiency and hence processing speed of a convolutional neural network.

Summary

This object, for the computer-implemented method mentioned at the outset, is achieved in that a first one-dimensional (1D) convolution is carried out in the first layer, in order to determine the first bundle of feature maps, convoluting a first one-dimensional filter kernel with a first one-dimensional data vector extracted from the data cube, and in that, parallel to the first one-dimensional convolution, a second one-dimensional convolution is carried out in the first layer, convoluting a second one-dimensional filter kernel with the same one-dimensional data vector extracted from the data cube.

By separating the necessary computation of two-dimensional (2D) convolutions needed to arrive at a respective feature map into one-dimensional convolution operations, a parallelization of the network is achieved. The resulting structure corresponds to parallel networks with lower dimensionality, which allows for massive acceleration of the execution times of neural networks. Said first and second one-dimensional convolution act on the same data vectors extracted from the data cube, creating different feature maps, however.

The invention allows to separate the original problem of computing large 2D-convolutions for each feature map into several parallel one-dimensional-convolutions for each feature map, respectively, where, in a particularly beneficial manner, 2D-structures to carry out the one-dimensional-convolution may be applied. Such 2D-algorithms are well understood and published, e.g., in CHENG, Chao; PARHI, Keshab K. Fast 2D convolution algorithms for convolutional neural networks. IEEE Transactions on Circuits and Systems I: Regular Papers, 2020, 67. Jg., Nr. 5, S. 1678-1691. By ensuring that the first one-dimensional filter kernel and the second one-dimensional filter kernel are asymmetrical filter kernels, each having a first dimension with a length of one and a second dimension with a length greater than one, a 2D-convolution may be computed, leading to the same result as a series of parallel 1D-convolutions, but allowing to benefit from the advantages of strong 2D-architecture. This allows for significant increases in computation speeds and efficiency.

In a preferred embodiment of the invention, it is of course not just a single layer comprising a convolution step, but a chain of sequentially connected layers comprising said first layer and a sequence of n-1 further layers is provided in the neural network. Within the scope of this embodiment, the first layer receives the data cube as input data to determine said first bundle of feature maps, each of the further layers following the first layer in the chain of sequentially connected layers determining a further bundle of feature maps from a bundle of feature maps determined by a preceding layer, the sequentially last layer in the chain of sequentially connected layers determining the bundle of feature maps passed on to the output layer for determining the at least one classifier.

This way, the inventive concept of separating the complex operation of two-dimensional-convolution into parallel one-dimensional-convolutions, all respective one-dimensional-convolutions preferably employing kernels with asymmetrical dimensions (1xn), and all respective one-dimensional-convolutions preferably being carried out with 2D-algorithms on 2D-architecture, is extended to neural networks as they are typically employed in the prior art, with a sequence of interconnected layers, where each layer demands a series of computations, particularly convolutions. Specifically, it may be provided that, in each of the layers arranged in the chain of layers, at least two one-dimensional convolution operations are carried out in parallel to one another, each convolution operation convoluting a one-dimensional filter kernel with a one-dimensional data vector, the data vectors in the first layer being extracted from the three-dimensional image data cube, or in the layers following the first layer, the data vectors extracted from the bundle of feature maps provided by the preceding convolutional layer.

In a further preferred embodiment, also in the output layer parallel one-dimensional-convolutions may be used, in order to determine the at least one classifier. To that end, a first one-dimensional convolution may be carried out, convoluting a first one-dimensional output filter kernel with a first data vector extracted from the bundle of feature maps transferred to the output layer, and in parallel to this first one-dimensional convolution, a second one-dimensional convolution may be carried out, convoluting a second one-dimensional output filter kernel with a second data vector extracted from the bundle of feature maps transferred to the output layer.

As will be discussed later, the present invention allows for great flexibility in many aspects, particularly regarding its implementation. Hence several further advantageous embodiments exist, such that exclusively one-dimensional convolution operations are carried out to determine said bundles of feature maps, and in that algorithms of traditional two-dimensional convolutional layers are used to carry out one-dimensional convolution operations in parallel to determine said feature maps and hence bundles of feature maps.

Moreover, for the detection device mentioned at the outset, the object of further improving the efficiency and the processing speed of a convolutional neural network is achieved in that the computing unit is further designed to, in the first layer, carry out a first one-dimensional convolution by convoluting a first one-dimensional filter kernel with a first one-dimensional data vector extracted from the data cube, and, in parallel to the first one-dimensional convolution, in the first layer, carry out a second one-dimensional convolution by convoluting a second one-dimensional filter kernel with the same one-dimensional data vector extracted from the data cube, in order determine said first bundle of feature maps.

As mentioned previously, the method and the device according to the invention allow to process large data sets more efficiently, which may arise especially in applications with hyper-spectral or multispectral cameras. Hence, the discussed objective is further achieved by an arrangement comprising a detection according to the invention and a hyperspectral or multispectral camera, the hyperspectral or multispectral camera being designed to record a hyperspectral or multispectral image of an object to be detected and to transfer it to the detection device as a three-dimensional image data cube for processing in the neural network provided in the computing unit.

Detailed description

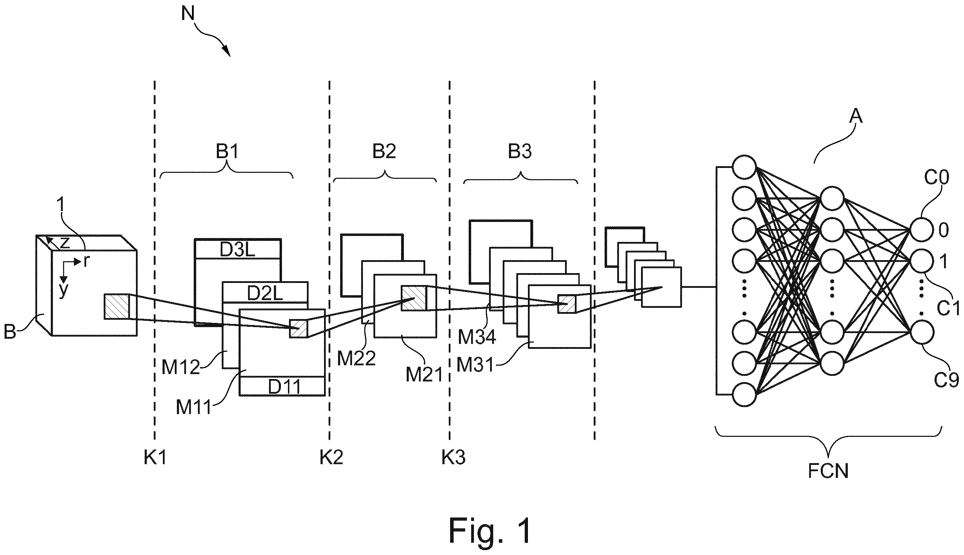

The present invention is described in greater detail below with reference to Figs.1 to 6, which show schematic and non-limiting advantageous embodiments of the invention by way of example. The specific examples described herein are only used to explain the content of the present invention and are not intended to limit the present embodiment. The following are shown:

Fig.1 a classical CNN classifier network for image data processing,

Fig.2 a one-dimensional CNN classifier network,

Fig.3 Fully Connected Layers (FCL) replaced by Convolutional Layers,

Fig.4 one-dimensional network transformed to a two-dimensional representation,

Fig.5 a parallelized one-dimensional CNN classifier network,

Fig.6 to an arrangement comprising a detection device according to the invention, and a hyper-spectral camera.

Neural networks, such as convolutional neural networks, feed forward neural networks, recurrent neural networks, perceptrons, multilayer perceptrons, Radial Basis Functional Neural Network, Modular Neural Networks etc. are frequently used to solve tasks like classification or identification. In the important case of hyperspectral analysis, CNNs assume a dominant role. Even though the invention may be applied to all types of above-mentioned networks, in the following CNNs are considered, only by mere way of example, however.

A hyperspectral camera 100, as disclosed in US 2021/0010864 A1, or in WANG, Yu Winston, et al. Multiplexed optical imaging of tumor-directed nanoparticles: a review of imaging systems and approaches. Nanotheranostics, 2017, 1. Jg., Nr. 4, S. 369, or in SUN, Weiwei; DU, Qian. Hyperspectral band selection: A review. IEEE Geoscience and Remote Sensing Magazine, 2019, 7. Jg., Nr. 2, S. 118-139, among other aspects, differs from a normal color camera in the number of captured spectra. Instead of just the three colors red, green and blue, hyperspectral cameras 100 are capable of handling many more spectral bands, typically more than 100. In a regular color image camera, filters are typically switched in front of the pixels, allowing only selected wavelengths corresponding to the filter to pass through and reach the pixel, such that said pixels capture an allowed wavelength only. In hyperspectral cameras 100, on the contrary, said filters are usually replaced by optical prisms that split the wavelengths between the pixels along a spatial axis of an underlying image sensor. The spectral information is thus distributed along a pre-described spectral axis r of an underlying optical sensor behind the prism, and is thus not limited to just one wavelength. Mainly for this reason, hyperspectral cameras 100 produce large amounts of data that need to be processed in case an image recorded with a hyperspectral camera 100 is to be analyzed, e.g., for object detection. As laid out previously, large data sets can be problematic, especially when combined with limited computation power, even when employing CNNs, which have proven to be particularly useful for handling large image data sets. With regards to said cameras, it is to be mentioned that the invention is by no means restricted to a specific kind of hyperspectral or multispectral camera, allowing an application of the invention to data cubes produced by different kinds of hyperspectral or multispectral cameras, e.g., also by so-called push-broom scanners.

As presented in Fig.1, neural networks N in the form of a CNN essentially consist of Convolutional Layers that extract features (Feature Extractor) and subsequent Fully Connected Layers that then use the extracted features to perform classification. A typical method to process data, e.g., image data, in the network N shown in Fig.1 comprises the steps of providing a data cube B, which may contain image data or other measured data, to a first layer K1 of the neural network N, from the data cube B, by means of said first layer K1, determining a first bundle B1 of feature maps Mn, each feature map Mn comprising an array of features M, from the first bundle B1 of feature maps Mn, in an output layer A of the neural network N, and determining at least one classifier C to classify said data cube B in a set of pre-defined feature classes. The main mathematical component of a convolutional layer for obtaining said features is the mathematical operation of convolution. For two-dimensional input data, a two-dimensional convolution may be expressed in the form of

$$M(i,j) = (B * K)(i,j) = \sum_{m} \sum_{n} B(m,n)K(i-m, j-n),$$

using a kernel K to carry out the convolution and hence to arrive at a feature map M. Usually, symmetrical kernel sizes are used for image processing, e.g. 3 x 3, 5 x 5, 7 x 7, etc. If only a convolution along one dimension is desired, e.g., along the spectral axis, the following description applies:

$$M(i) = (B * K)(i) = \sum_{m} B(m)K(i-m).$$

Here, a one-dimensional convolution may be performed with algorithms for 2D convolutions by using an asymmetric kernel K in which one dimension is equal to 1, e.g. $1 \times 3$, $1 \times 5$, $1 \times 7$ etc. The formula then corresponds to the following, where a second dimension is only introduced to allow the application of 2D-algorithms:

$$M(i,j) = (B * K)(i,j) = \sum_{m} B(m,n)K(i-m, j)$$

Within the scope of the present invention, it was found that, in particular by transferring the convolution operations from 2D to 1D, but by still applying algorithms for two-dimensional convolution, a significant improvement with regards to efficiency and performance of the CNN can be achieved.

With regards to Fig.1, this procedure may be described as carrying out a first one-dimensional convolution in the first layer K1, in order to determine the first bundle B1 of feature maps Mn, convoluting a first one-dimensional filter kernel K11 with a first one-dimensional data vector D1 extracted from the data cube B, and in addition and in parallel to the first one-dimensional convolution, carrying out a second one-dimensional convolution in the first layer K1, convoluting a second one-dimensional filter kernel K12 with the one-dimensional data vector D1 extracted from the data cube B. As will be explained in detail later, the invention is of course not limited to just two parallel convolution operations. In a preferred manner, a multiple of parallel one-dimensional convolutions may be carried out instead of an original two-dimensional convolution, depending on how many feature maps M are to be computed.

As can be seen in Fig.1, typically a chain of sequentially connected layers comprising said first layer K1 and a sequence of n-1 further layers K2... Kn is provided in the neural network N. In such a case, the first layer K1 receives the data cube B as input data to determine said first bundle B1 of feature maps Mn, each of the further layers K2... Kn following the first layer K1 in the chain of sequentially connected layers determines a further bundle Bn of feature maps Mn from a bundle Bn of feature maps Mn determined by a preceding layer K1...Kn-1, the sequentially last layer Kn in the chain of sequentially connected layers K1... Kn determines the bundle Bn of feature maps Mn passed on to the output layer A for determining the at least one classifier C. In this context, in a particularly preferred embodiment, it may be provided that in each of the layers Kn arranged in the chain of layers K1...Kn, at least two one-dimensional convolution operations are carried out in parallel to one another, each convolution operation convoluting a one-dimensional filter kernel K11, K12, ... Kn1, Kn2 with a one-dimensional data vector D1, the data vector D1 in the first layer K1 being extracted from the three-dimensional image data cube B, or in the layers K2...Kn following the first layer K1, the data vectors D11, D12, ..., Dn1, Dn2 extracted from the bundle Bn of feature maps Mn provided by the preceding convolutional layer K1...Kn-1.

In the case described above, where several convolutions are executed in consecutive convolutional layer, in many practical use cases, it is oftentimes reasonable to reduce the resolution in a stepwise manner, after each convolutional layer. This may be achieved by means of a so-called max-pooling layer. Only the largest value of the input image within a kernel is in this case used as an output to be fed into the next layer. In this case, an asymmetric kernel K in which one dimension is equal to 1 can be adapted so that the resolution in one axis is retained (= number of parallelized networks) and max-pooling is performed in the other axis that is identical to that of a one-dimensional network. The same applies if the reduction of the resolution is realized with strides instead of max-pooling. Literature provides a broad variety of a numerical normalization operations which may be employed for this purpose, e.g., a max-pooling operation, a ReLu operation, a softmax weighted pooling operation, subsampling operation and/or local contrast optimization. These options are well known from the prior art.

Further, it may be provided that in the output layer A, in order to determine the at least one classifier C, a first one-dimensional convolution is carried out, convoluting a first one-dimensional output filter kernel A1 with a first data vector DA1 extracted from the bundle Bn of feature maps Mn transferred to the output layer A, and that, parallel to the first one-dimensional convolution, a second one-dimensional convolution is carried out, convoluting a second one-dimensional output filter kernel A2 with a second data vector DA2 extracted from the bundle Bn of feature maps Mn transferred to the output layer A. In this way, it may be achieved that in a neural network N according to the invention, exclusively one-dimensional convolution operations are carried out to determine said bundles Bn of feature maps Mn allowing for an optimization of throughput and effectivity.

The methods described above can be used to create parallelized independent instances of one-dimensional CNN networks. This approach allows to massively accelerate the execution of the algorithms because larger data packets are transported to the executing hardware (GPU, ASICs, Edge AI-Accelerators, as manufactured, e.g., by Movidius, Hailo, etc.) and thus a lot of overhead can be saved compared to a sequential execution of one-dimensional CNN networks. As two-dimensional CNNs are a major general application in the field of deep learning, the hardware structures of the neural network accelerators are also optimized for this and can therefore also be executed more efficiently and quickly. The differentiation between hardware structures of neural network accelerators optimized for two-dimensional-convolution and hardware structures of neural network accelerators optimized for one-dimensional-convolution is mainly related to the input data dimensionality they are designed for and the types of patterns they can capture.

As pointed out previously, said convolution operations, no matter if two-dimensional or one-dimensional, require filter weights that are used in the sums to carry out the convolution operations. Typically, to derive said filter weights, training of a network is applied, as is well known from the prior art, using algorithms like gradient descent or the Newton method or the conjugate gradient method etc. However, training a network from scratch may itself again cost computation time. If the time required for the training a network according to the invention does not play a major role or in case powerful hardware is available for the training, then parallelization is not necessarily required for the training already. In this case, the network will be set up as a two-dimensional network for training, but the input layer has a size of 1 in the spatial axis. This means that the network can be trained in regular fashion and the weights obtained therefrom can still be loaded into the parallelized two-dimensional network regardless of the size along the spatial axis. From a network obtained this way, a network according to the invention having said structure of parallel one-dimensional-convolutions may eventually be derived, according to the procedure explained earlier.

Moreover, these filter weights may be derived from a reference neural network, still based on higher-dimensional convolutions. In this regard, a reference neural network may be provided, the reference neural network having a number of reference layers corresponding to the number n of layers, in that in the reference layers, exclusively two-dimensional or multidimensional convolutions are carried out, and in that from the reference layers, at least one value of a filter weight of a one-dimensional filter kernel in one of the layers of the neural network N is determined.

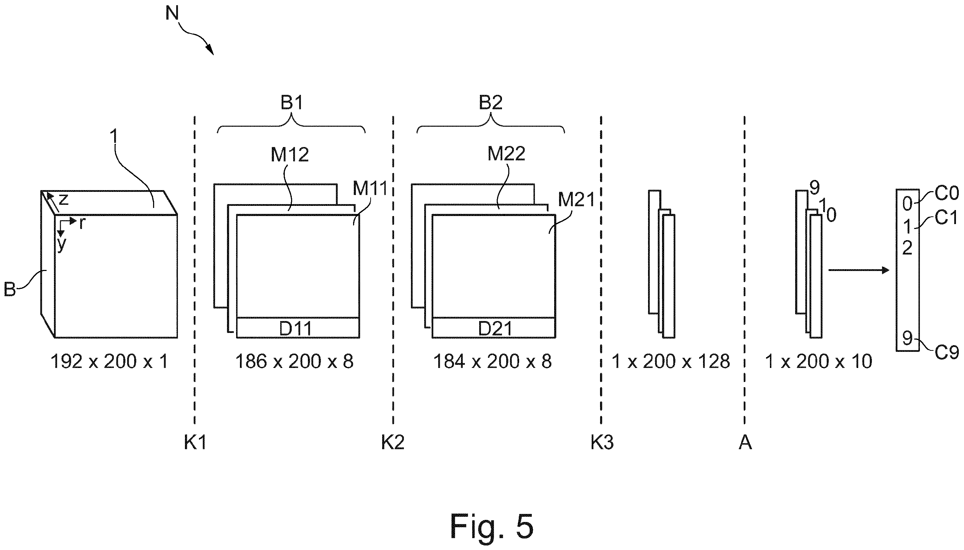

In this context, it is to be mentioned that a convolution operation is mathematically equivalent to a fully connected layer if the kernel size is equal to the input size and the number of kernels is equal to the output size; this is also referred to as unshared convolution. This property can be made use of in the procedure to turn a convolutional layer into several parallel fully connected layers. Specifically, a convolutional layer with a kernel size of 1 in the spatial axis and r in the spectral axis may be used, where r is the full size of this axis from the previous layer, as depicted in Figs.1 and 5. The number of kernels is chosen according to the number of nodes at the output of the quasi-fully connected layer. A flattening layer, which is usually required to connect the tensor format between the convolutional layer and the fully connected layer, therefore is not necessary. A subsequent fully connected layer parallelized in this way must have a kernel size of $1 \times 1$ and the number of kernels is again the corresponding number of nodes of a fully connected layer. In the case of the last layer of a classification network, for example, this would correspond to the number of classes.

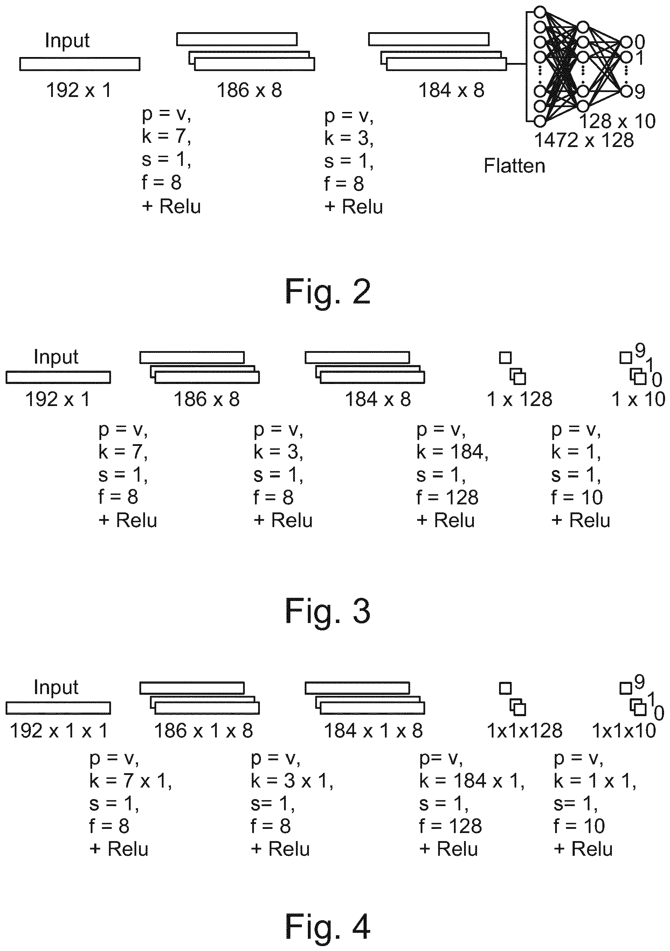

To further discuss the dependencies of the components of the neural network N according to the invention, but also to further analyze the relation between a "classical" network based on 2D-convolution with a network N according to the invention, a simple CNN classifier network is considered. The starting point for the following discussion is a one-dimensional network, as shown in Fig.2, consisting of a spectrum with 192 bands. In Figs.2-5, p stands for "padding", k for "kernel", s for "stride", and f for "filter", all of these terms being well-known from the prior art, e.g., from US 11,025,907 B2, and each set of parameters p, k, s, f describing a respective convolution operation. This is followed by 2 convolutional layers, a flatten layer and 2 fully connected layers for classification, whereby the second of these layers is already the output layer, whose number of nodes is equal to the number of classes. The network in the example can therefore divide the input spectrum into 10 different classes. The last layer is followed by the softmax function, also with 10 outputs, which is not shown separately here.

In Fig.3, the fully connected layers have been replaced by convolution layers and are mathematically identical. A flatten layer is therefore no longer necessary as the tensor does not have to be reshaped. The softmax function must work along the filter axis accordingly.

Fig.4 shows the same network, an additional dimension has been added to the input tensor, this has a length of 1, so the input is identical to Fig.2. The output is also identical to Figure 2 if the kernel has a size of 1 along the spatial axis.

In Fig.5, the length of the spatial axis has been increased accordingly (200). However, the entire algorithm and the learned weights remain identical to Figure 4. The network is identical to 200 individual networks executed in parallel, i.e., 200 parallel networks based on 1D-convolution which are grouped together. In addition, the networks share the parameters/weights, which brings additional performance advantages.

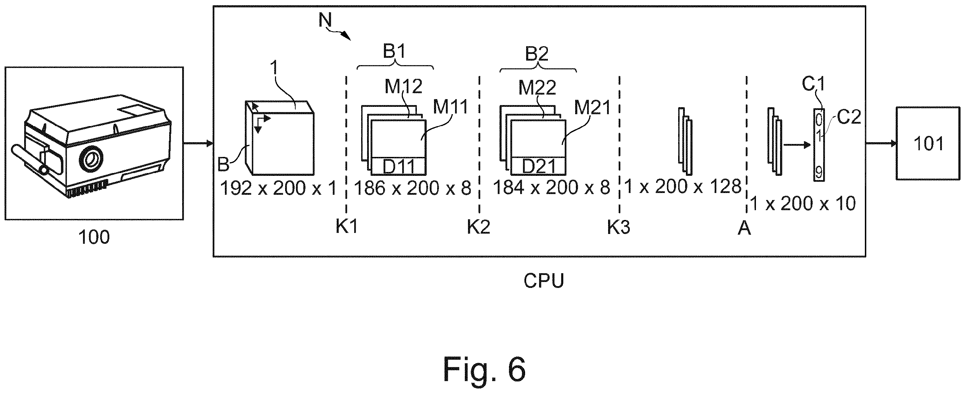

As mentioned earlier, the present invention may in particular be employed in the area of image processing. To that end, the data cube B may correspond to and hence represent an image to be processed, the image preferably being recorded with a hyperspectral or a multispectral camera 100, as shown in Fig.6. Results of such image analysis may be used in a broad range of technical applications, but specifically for controlling a technical process or another technical system depicted by block 101, e.g., for controlling a material recovery facility, wherein, based on the decision whether an object processed in the recovery facility corresponds to a pre-defined reference object or not, at least one control parameter for controlling said recovery facility may be modified.

Consequently, the method steps outlined above may be implemented in a computing unit, i.e., a CPU, the CPU hence running said neural network N according to the invention, and thus being designed to provide a data cube B to a first layer K1 of said neural network N; from the data cube B, by means of said first layer K1 of the neural network N, determine a first bundle B1 of feature maps Mn, each feature map Mn comprising an array of features M; from the first bundle B1 of feature maps Mn, by means of an output layer A of the neural network N, determine at least one classifier C to classify said data cube B in a set of pre-defined feature classes. In accordance with the invention, the computing unit CPU may further be designed to, in the first layer K1, carry out a first one-dimensional convolution by convoluting a first one-dimensional filter kernel K11 with a first one-dimensional data vector D1 extracted from the data cube B, and, in parallel to the first one-dimensional convolution, in the first layer K1, carry out a second one-dimensional convolution by convoluting a second one-dimensional filter kernel K12 with the one-dimensional data vector D1 extracted from the data cube B, in order determine said first bundle B1 of feature maps Mn.

Such a CPU, or in general terms a detection device comprising such a CPU, in combination with an appropriate camera, most preferably a hyperspectral or multispectral camera, may set up an arrangement for image recording and respective data processing. In such an arrangement, the hyperspectral or multispectral camera may be designed to record a hyper-spectral or multispectral image of an object to be detected and to transfer it to the detection device as a three-dimensional image data cube B for processing in the neural network N provided in the computing unit CPU.

## Claims

1. A computer-implemented method for processing a neural network (N), comprising the steps of

   - providing a data cube (B) to a first layer (K1) of the neural network (N);
   - from the data cube (B), by means of said first layer (K1), determining a first bundle (B1) of feature maps (Mn), each feature map (Mn) comprising an array of features (M);
   - from the first bundle (B1) of feature maps (Mn), in an output layer (A) of the neural network (N), determining at least one classifier (C) to classify said data cube (B) in a set of pre-defined feature classes;

   **characterized in that,** in order to determine the first bundle (B1) of feature maps (Mn), a first one-dimensional convolution is carried out in the first layer (K1), convoluting a first one-dimensional filter kernel (K11) with a first one-dimensional data vector (D1) extracted from the data cube (B), **and in that,** parallel to the first one-dimensional convolution, a second one-dimensional convolution is carried out in the first layer (K1), convoluting a second one-dimensional filter kernel (K12) with the same one-dimensional data vector (D1) extracted from the data cube (B).

2. Method according to claim 1, **characterized in that** the first one-dimensional filter kernel (K11) and the second one-dimensional filter kernel (K12) are asymmetrical filter kernels, a first dimension of each filter kernel (K11, K12) having length one and a second dimension of each filter kernel (K11, K12) having a length greater than one.

3. Method according to claim 1 or 2, **characterized in that** the first one-dimensional filter kernel (K11) and the second one-dimensional filter kernel (K12) have identical dimensions but different filter weights.

4. Method according to claim 1, 2 or 3, **characterized in that** a chain of sequentially connected layers comprising said first layer (K1) and a sequence of n-1 further layers (K2... Kn) is provided in the neural network (N),

- the first layer (K1) receiving the data cube (B) as input data to determine said first bundle (B1) of feature maps (Mn);
- each of the further layers (K2... Kn) following the first layer (K1) in the chain of sequentially connected layers determining a further bundle (Bn) of feature maps (Mn) from a bundle (Bn) of feature maps (Mn) determined by a preceding layer (K1... Kn-1);
- the sequentially last layer (Kn) in the chain of sequentially connected layers (K1... Kn) determining the bundle (Bn) of feature maps (Mn) passed on to the output layer (A) for determining the at least one classifier (C).

5. Method according to claim 4, **characterized in that** in each of the layers (Kn) arranged in the chain of layers (K1...Kn), at least two one-dimensional convolution operations are carried out in parallel to one another, each convolution operation convoluting a one-dimensional filter kernel (K11, K12, ... Kn1, Kn2) with a one-dimensional data vector (D1), the data vector (D1) in the first layer (K1) being extracted from the three-dimensional image data cube (B), or in the layers (K2...Kn) following the first layer (K1), the data vectors (D11, D12, ..., Dn1, Dn2) extracted from the bundle (Bn) of feature maps (Mn) provided by the preceding convolutional layer (K1...Kn-1).

6. Method according to any one of the previous claims, **characterized in that** in the neural network (N), exclusively one-dimensional convolution operations are carried out to determine said bundles (Bn) of feature maps (Mn).

7. Method according to any of the previous claims, **characterized in that** at least two of the neural networks (N) are grouped together such that the data vectors (Bn) and feature maps (Mn) constitute a two-dimensional array, **and in that** algorithms of traditional two-dimensional convolutional layers are used to carry out one-dimensional convolution operations in parallel to determine said bundles (Bn) of feature maps (Mn).

8. Method according to any one of the previous claims, **characterized in that** in the output layer (A), in order to determine the at least one classifier (C), a first one-dimensional convolution is carried out, convoluting a first one-dimensional output filter kernel (A1) with a first data vector (DA1) extracted from the bundle (Bn) of feature maps (Mn) transferred to the output layer (A), **and in that,** parallel to the first one-dimensional convolution, a second one-dimensional convolution is carried out, convoluting a second one-dimensional output filter kernel (A2) with a second data vector (DA2) extracted from the bundle (Bn) of feature maps (Mn) transferred to the output layer (A).

9. Method according to any one of the previous claims, **characterized in that** a fully connected layer (FCN) in the reference neural network (R-N) is provided as output layer (A) and is converted to a convolutional layer in the neural network (N).

10. Method according to any one of the previous claims, **characterized in that** the data cube contains (B) image data or audio data or other measured data.

11. Method according to any one of the previous claims, **characterized in that** a numerical normalization operation is carried out on at least one entry of a feature map (Mn), preferably a max-pooling operation and/or a ReLu operation and/or a softmax weighted pooling operation and/or subsampling operation and/or local contrast optimization.

12. Method according to any one of the previous claims, **characterized in that** a hyper-spectral or a multispectral camera is used to record an image of an object as the data cube (B) to be fed to the first layer (K1) of the neural network (N).

13. Use of the method according to claim 12 for controlling a material recovery facility, wherein, based on the decision whether an object processed in the recovery facility corresponds to a pre-defined reference object or not, at least one control parameter for controlling said recovery facility is modified.

14. Detection device for detecting an object (1), having a computing unit (CPU) running a neural network (N), the computing running (CPU) being designed to

- provide a data cube (B) to a first layer (K1) of said neural network (N);
- from the data cube (B), by means of said first layer (K1) of the neural network (N), determine a first bundle (B1) of feature maps (Mn), each feature map (Mn) comprising an array of features (M);
- from the first bundle (B1) of feature maps (Mn), by means of an output layer (A) of the neural network (N), determine at least one classifier (C) to classify said data cube (B) in a set of pre-defined feature classes;

**characterized in that** the computing unit (CPU) is further designed to, in the first layer (K1), carry out a first one-dimensional convolution by convoluting a first one-dimensional filter kernel (K11) with a first one-dimensional data vector (D1) extracted from the data cube (B), and, in parallel to the first one-dimensional convolution, in the first layer (K1), carry out a second one-dimensional convolution by convoluting a second one-dimensional filter kernel (K12) with the same one-dimensional data vector (D1) extracted from the data cube (B), in order determine said first bundle (B1) of feature maps (Mn).

15. Arrangement comprising a detection device according to claim 14 and a hyperspectral or multispectral camera, the hyperspectral or multispectral camera being designed to record a hyperspectral or multispectral image of an object to be detected and to transfer it to the detection device as a three-dimensional image data cube (B) for processing in the neural network (N) provided in the computing unit (CPU).

Fig. 1

Input

192 x 1

186 x 8

p = v,
k = 7,
s = 1,
f = 8
+ Relu

p = v,
k = 3,
s = 1,
f = 8
+ Relu

184 x 8

0
1
9

128 x 10
1472 x 128

Flatten

## Fig. 2

Input

192 x 1

186 x 8

184 x 8

1 x 128

9
1
0

1 x 10

p = v,
k = 7,
s = 1,
f = 8
+ Relu

p = v,
k = 3,
s = 1,
f = 8
+ Relu

p = v,
k = 184,
s = 1,
f = 128
+ Relu

p = v,
k = 1,
s = 1,
f = 10
+ Relu

## Fig. 3

Input

192 x 1 x 1

186 x 1 x 8

184 x 1 x 8

1x1x128

9
1
0

1x1x10

p = v,
k = 7 x 1,
s = 1,
f = 8
+ Relu

p = v,
k = 3 x 1,
s = 1,
f = 8
+ Relu

p= v,
k = 184 x 1,
s = 1,
f = 128
+ Relu

p = v,
k = 1 x 1,
s= 1,
f = 10
+ Relu

## Fig. 4

Fig. 5

Fig. 6

EP 4 641 444 A1

**EUROPEAN SEARCH REPORT**

Application Number

EP 24 17 1588

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DONG WEISHENG ET AL: "Deep Spatial-Spectral Representation Learning for Hyperspectral Image Denoising", IEEE TRANSACTIONS ON COMPUTATIONAL IMAGING, IEEE, vol. 5, no. 4, 1 December 2019 (2019-12-01), pages 635-648, XP011754728, ISSN: 2573-0436, DOI: 10.1109/TCI.2019.2911881 [retrieved on 2019-11-06] * abstract * * sections III.A, III.B; figure 1a * | 1-15 | INV. G06N3/045 G06N3/0464 G06N3/0499 |
| A | Anonymous: "Separable filter - Wikipedia", , 2 October 2022 (2022-10-02), XP093209287, Retrieved from the Internet: URL:https://en.wikipedia.org/w/index.php?t itle=Separable_filter&oldid=1113637614 * the whole document * | 1-15 | |
| A | Newton Mark: "Recycleye: Robotics and Image Recognition Team Up for Automated Trash Sorting", , 2 October 2023 (2023-10-02), XP093209713, Retrieved from the Internet: URL:https://web.archive.org/web/2023100220 1636/https://en.reset.org/recycleye-roboti cs-and-image-recognition-team-up-for-autom ated-trash-sorting/ * page 2 - page 4 * | 1-15 | |
| A | WO 2017/106603 A1 (STC UNM [US]) 22 June 2017 (2017-06-22) * page 4; claim 1 * | 1-15 | |

**TECHNICAL FIELDS SEARCHED (IPC)**

G06N

The present search report has been drawn up for all claims

| Place of search | Date of completion of the search | Examiner |
|---|---|---|
| Munich | 27 September 2024 | Thielemann, Benedikt |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 641 444 A1

## ANNEX TO THE EUROPEAN SEARCH REPORT
## ON EUROPEAN PATENT APPLICATION NO.

EP 24 17 1588

27-09-2024

| Patent document cited in search report | Publication date | Patent family member(s) | Publication date |
|---|---|---|---|
| WO 2017106603 A1 | 22-06-2017 | US 2018357744 A1 | 13-12-2018 |
| | | US 2021065328 A1 | 04-03-2021 |
| | | WO 2017106603 A1 | 22-06-2017 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10482337 B2
- EP 3153996 A2
- US 20210010864 A1
- US 11025907 B2

**Non-patent literature cited in the description**

- **CHENG, CHAO ; PARHI, KESHAB K.** Fast 2D convolution algorithms for convolutional neural networks.. *IEEE Transactions on Circuits and Systems I: Regular Papers*, 2020, vol. 67 (5), 1678-1691
- **WANG, YU WINSTON et al.** Multiplexed optical imaging of tumor-directed nanoparticles: a review of imaging systems and approaches.. *Nanotheranostics*, 2017, vol. 1 (4), 369
- **SUN, WEIWEI ; DU, QIAN.** Hyperspectral band selection: A review.. *IEEE Geoscience and Remote Sensing Magazine*, 2019, vol. 7 (2), 118-139